Europäisches Patentamt

European Patent Office

Office européen des brevets

(11) Numéro de publication: **0 314 117 B1**

## FASCICULE DE BREVET EUROPEEN

(45) Date de publication de fascicule du brevet: **12.08.92**   (51) Int. Cl.⁵: **B60T 7/12**, G01S 13/93

(21) Numéro de dépôt: **88117870.1**

(22) Date de dépôt: **26.10.88**

(54) **Système électro-optique pour freinage automatique de véhicules.**

(30) Priorité: **26.10.87 DZ 18487**

(43) Date de publication de la demande:
**03.05.89 Bulletin  89/18**

(45) Mention de la délivrance du brevet:
**12.08.92 Bulletin  92/33**

(84) Etats contractants désignés:
**CH DE FR GB IT LI**

(56) Documents cités:
**FR-A- 2 072 128**
**GB-A- 2 081 484**
**US-A- 3 924 107**

**PATENT ABSTRACTS OF JAPAN vol. 5, no.
138 (P-78) (810), 2 september 1981**

(73) Titulaire: **Djafer-Cherif, Zieneddine
Lotissement 219 Baraki 16210
Alger(DZ)**

(72) Inventeur: **Djafer-Cherif, Zieneddine
Lotissement 219 Baraki 16210
Alger(DZ)**

(74) Mandataire: **Schmidt, Horst, Dr.
Siegfriedstrasse 8
W-8000 München 40(DE)**

**Description**

L'invention concerne un système pour freinage automatique de véhicules suivant la partie d'introduction de la revendication 1.

L'augmentation du nombre de véhicules et l'expansion de leurs domaines d'utilisation a entraîné des accidents de circulation et ceci est dû généralement au:

- mauvais contrôle de la route par le conducteur, qui est surpris par des obstacles souvent inévitables,
- l'excès de vitesse au point où la commande du véhicule devient difficile et incontrôlable,
- mauvaises conditions de visibilité (en temps de pluie, neige, brouillard, vent de sable, fumée... etc).

On a déjà proposé de munir des voitures avec des systèmes de radar qui produisent soit des signeaux Doppler soit des signeaux de superposition ( FR-A-2 072 128 et GB-A-2 081 484). Ces systèmes de radar sont coûteux et compliqués et generallement ne permettent que de mesurer la vitesse relative d'un obstacle vis-à-vis du véhicule.

Il est donc l'object de la presente invention de créer un système pour freinage automatique de véhicules, qui étant simple de construction permet une exacte determination de distance produisant ainsi un freinage automatique de véhicules au cas de risque d'une collision avec un obstacle particulièrement sous les conditions differentes.

Le système pour freinage automatique de véhicules suivant l'invention est characterisé par les mesures mentionnées dans la partie charactérisante de la revendication 1.

Des modes de réalisation préférés de l'invention sont décrit dans les revendications 2 et suivantes.

Dans le suivant l'invention sera décrit en detail avec reference aux figures. Les figures montrent:

Fig. I-1
un schéma synoptique du système de l'invention,

Fig. II-1
un schéma synoptique de la partie d'emission reception,

Fig. II-2
un schéma detaillé du circuit de Figure II-1,

Fig. II-3
un chronogramme pour expliquer le fonctionnement du circuit de Figure II-1,

Fig. III-1
un schéma synoptique du module de decision,

Fig. III-2
un schéma detaillé du module de Figure III-1,

Fig. III-3a,3b, 4a et 4b
des schémas pour expliquer des modes de freinage differantes,

Fig. III-5
un organigramm pour expliquer l'invention,

Fig. IV-1
un schéma synoptique du bloc d'exécution,

Fig. IV-2
un circuit de commande pour le bloc d'exécution,

Fig. IV-3a et 3b
un schéma avec les organes d'execution,

Fig. V-1a et b
des circuit electronique pour l'alimentation et le génerateur de rythme et

Fig. V-2
une schéma general du système selon l'invention.

Section I

Figure I montre un schéma synoptique du système selon l'invention, Ceci contient un "module d'émission, de détetion et de traitement numérique de l'information" un "module de décision" et un "module d'exécution". Les sections qui suivent traitent en détail le fonctionnement et le calcul de ces trois modules.

Grâce au signal infra-rouge émis par son émetteur, le système peut détecter les obstacles dans les mauvaises conditions de visibilité et même dans l'obscurité, ce qui le rend utile dans la circulation de nuit.

I-2 Les modes d'exécution de freinage

On distingue deux modes de freinage:
- freinage progressif
- freinage sec.

Le freinage progressif est choisi dans le cas où l'obstacle se trouve suffisamment éloigné (60 m et 120 m) du véhicule qui roule à une vitesse relative élevée entre (81 km/h et 135 km/h).

Ce freinage est programmé aussi pour un obstacle qui surgit subitement devant le véhicule qui roule à une vitesse de plus de 135 Km/h même si la distance relative est faible mais à une distance inférieure à 100 m, afin d'éviter le dérapage et le renversement.

Le freinage sec est programmé pour le cas où le véhicule roule à une vitesse supérieure ou égale à 81 Km/h, et une distance inférieure à 60 m.

Ces deux modes de freinage sont conditionnés par l'état de la chaussée (sèche ou glissante).

Dans le cas où la chaussée est sèche, le freinage suit l'ordre suscité, quant à la chaussée glissante, le freinage sec est exclu et le freinage progressif est opérationnel pour une vitesse de plus de 54 Km/h.

Pour cela le conducteur choisit le mode de freinage (à l'aide d'un bouton de consigne) selon l'état de la chaussée (sèche ou glissante).

Section II

## MODULE EMISSION-DETECTION ET TRAITEMENT NUMERIQUE DE L'INFORMATION

### II-1 Description générale

Cette partie est constituée de : (voir fig. II-1)
- Un émetteur infra-rouge (IR), qui émet un signal (IR) d'une certaine longueur d'onde [850 nm], modulé par un train d'impulsions SE qui est généré par le générateur de rythme (voir plus loin générateur de rythme).
- Un récepteur IR qui travaille sur la même longueur d'onde.
- Un module de traitement numérique de l'information qui, à partir du signal émis SE et d'un signal SR recueilli à la sortie du récepteur, nous donne un nombre binaire proportionnel au décalage dans le temps de ces deux signaux.

### II-2 Principe de fonctionnement (fig. II-3)

#### a) Emission du signal IR :

Le signal SE délivré par le générateur de rythme attaque une diode IR à travers un amplificateur de courant capable d'assurer à la diode d'émettre à une portée supérieure à 100 m dans les conditions normales de visibilité : le signal IR émis par la diode se trouve, alors, modulé par le train d'impulsions.

La période T du signal SE est choisie de telle manière que pendant celle-ci, le microprocesseur peut exécuter le programme entièrement.

#### b) Réception du signal IR :

Dans le cas d'absence d'obstacles sur la route, le récepteur ne reçoit aucun signal ; dans le cas contraire le signal sera réfléchi et recueilli par celui-ci qui comprend en fait, une diode IR, qui grâce à elle on recueillera un courant proportionnel à l'enveloppe du signal réfléchi.

La tension aux bornes du circuit de réception sera amplifiée et comparée à un seuil réglable.

Le seuil du comparateur (VREF) dépend des conditions météorologiques, pour cela le système est doté d'un réglage de consigne suivant les conditions de visibilité.

Le conducteur procède au réglage du seuil selon le cas : (pluie, neige, brouillard, vent de sable..etc)

Le signal SR recueilli à la sortie du comparateur est une réplique du signal SE, mais retardé dans le temps.

Pour couvrir le gabarit de roulement du véhicule, on a doté le système de quatre paires d'émetteur-récepteur semblables à celui décrit précédemment. Ils sont disposés à distances égales à l'avant du véhicule de telle manière à couvrir la largeur du gabarit.

Les émetteurs et les récepteurs doivent être très directifs afin d'éviter les signaux parasites provenant des autres véhicules qui sont dotés du même système.

Le signal SR à traiter sera remplacé par la somme logique des quatre signaux recueillis à la sortie des comparateurs.

#### c) Traitement numérique de l'information :

Le rôle de ce module est d'exprimer le décalage temporel entre SE et SR en un nombre binaire (rappelons qu'à partir de ce décalage on peut déterminer la distance véhicule-obstacle et à partir de deux décalages successifs on peut déterminer la vitesse relative véhicule-obstacle).

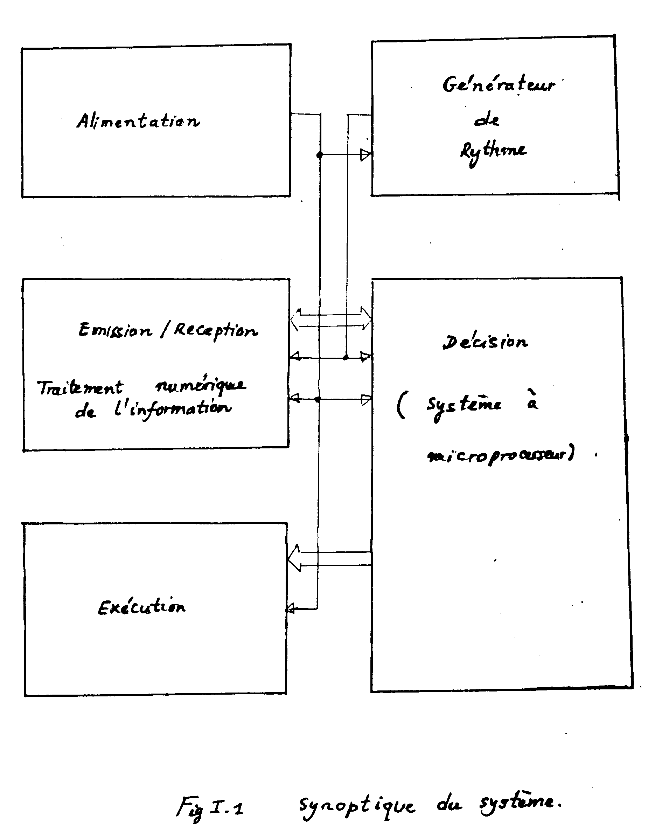

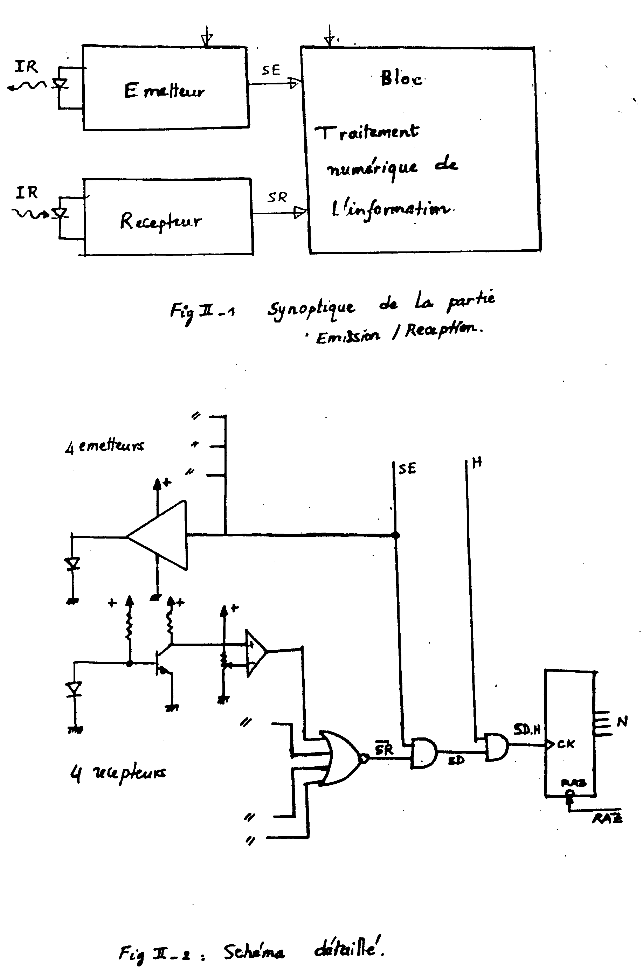

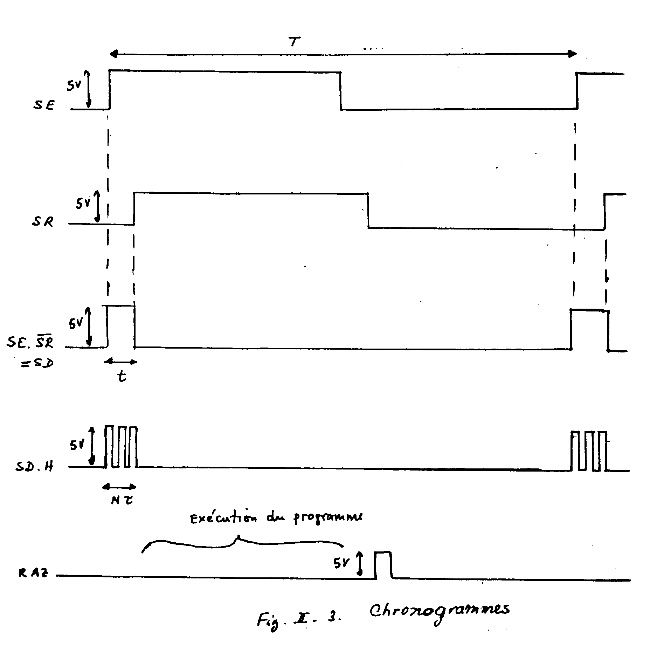

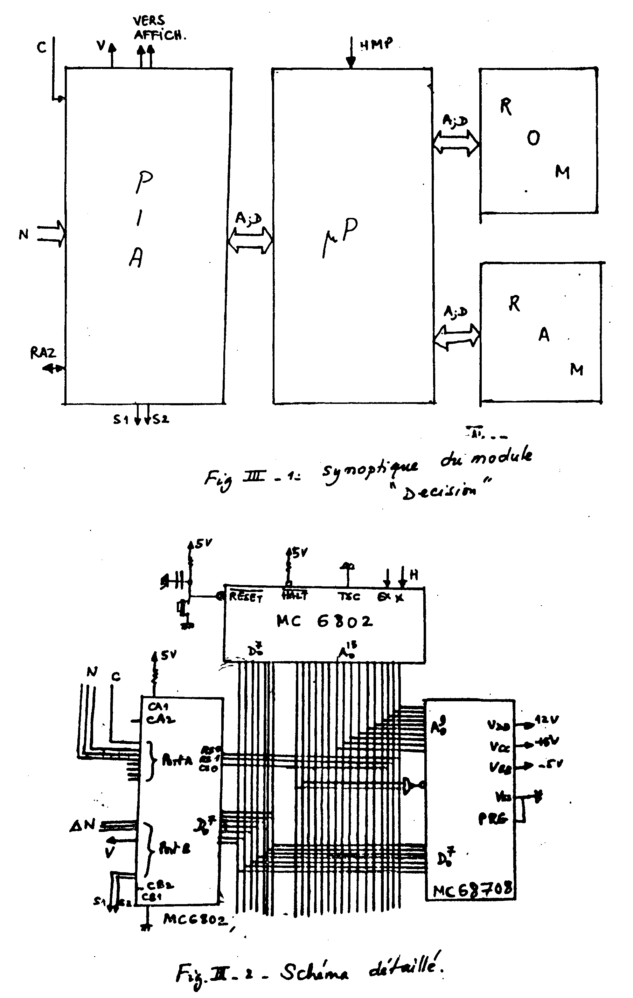

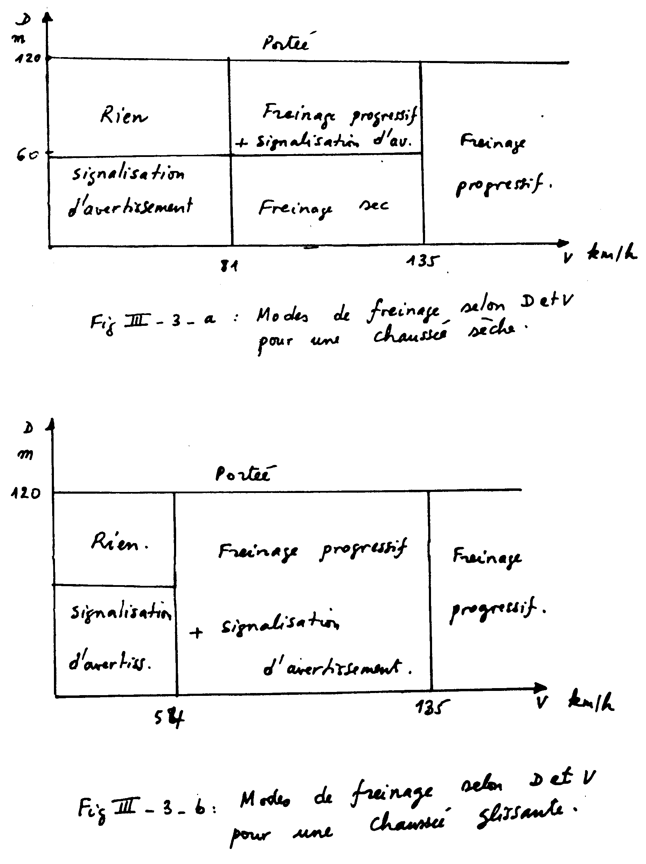

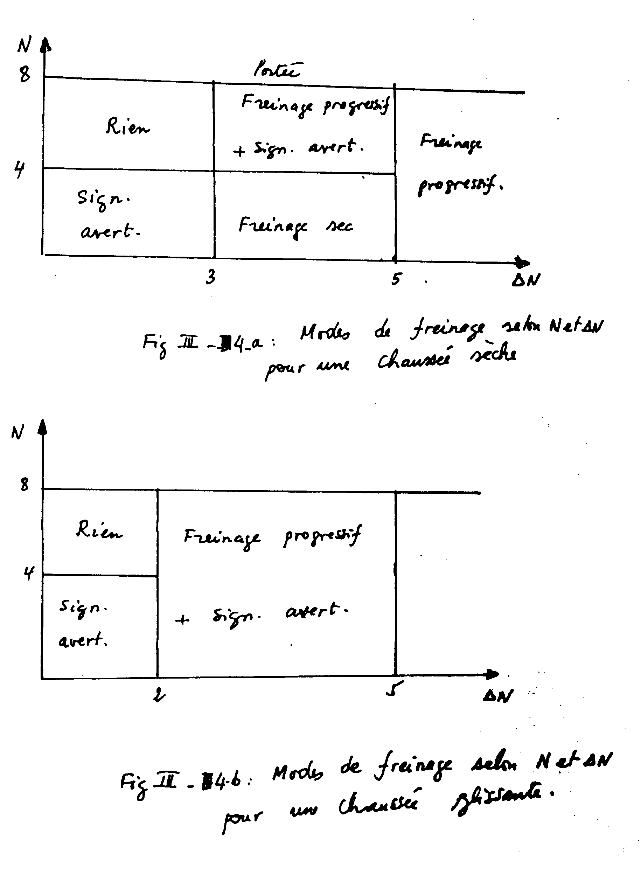

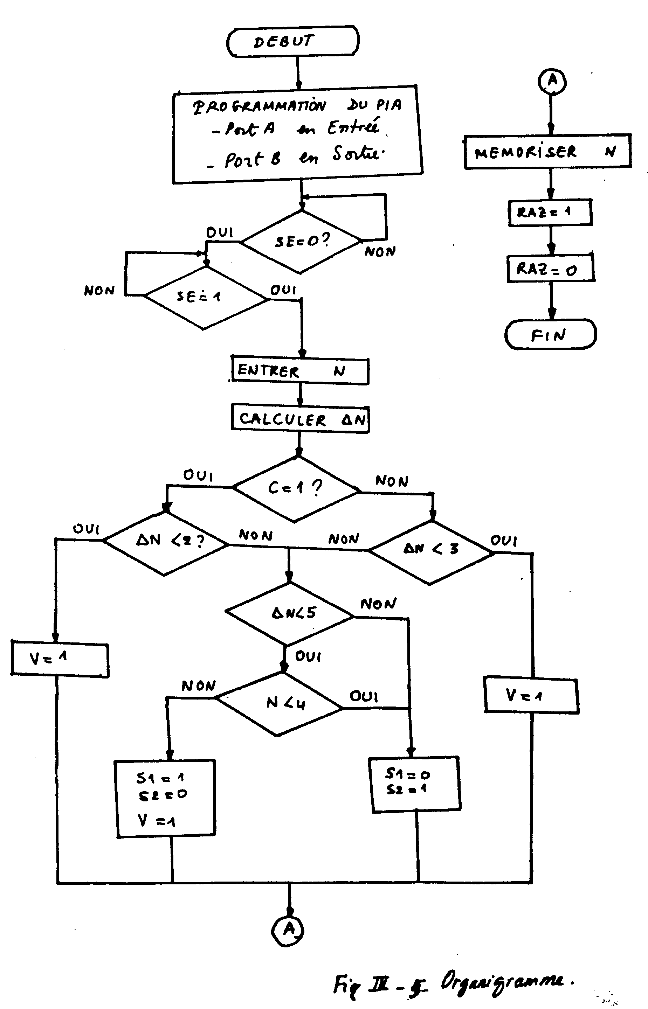

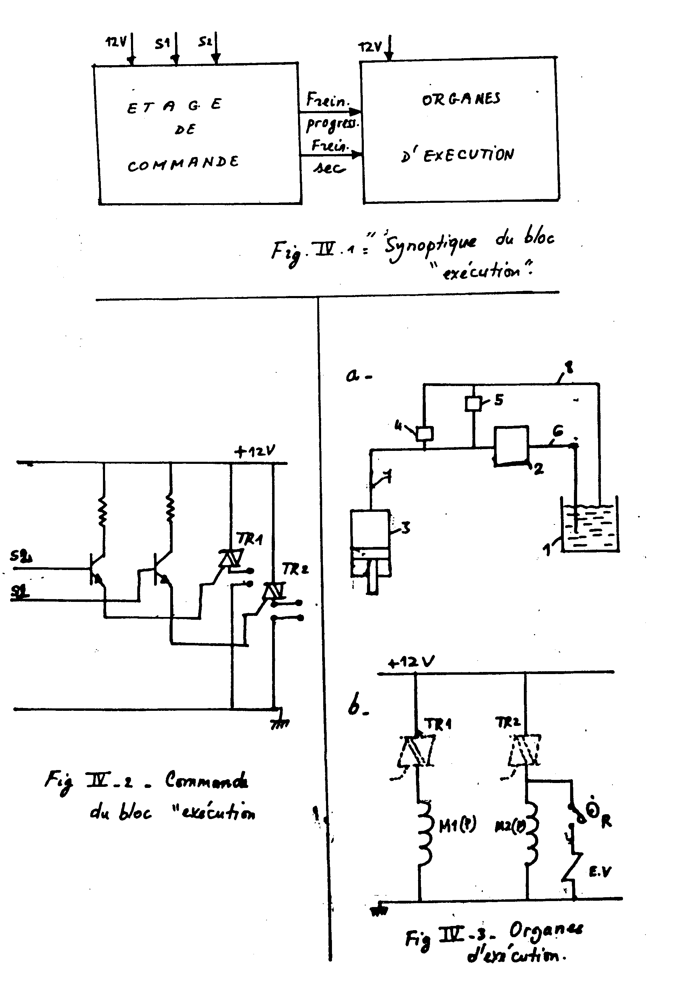

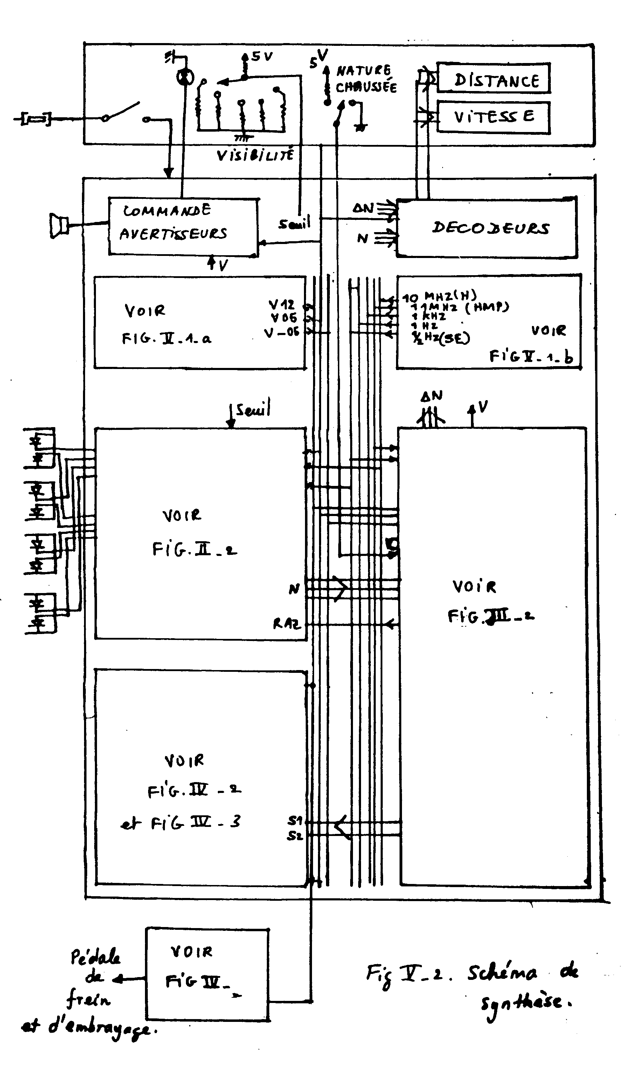

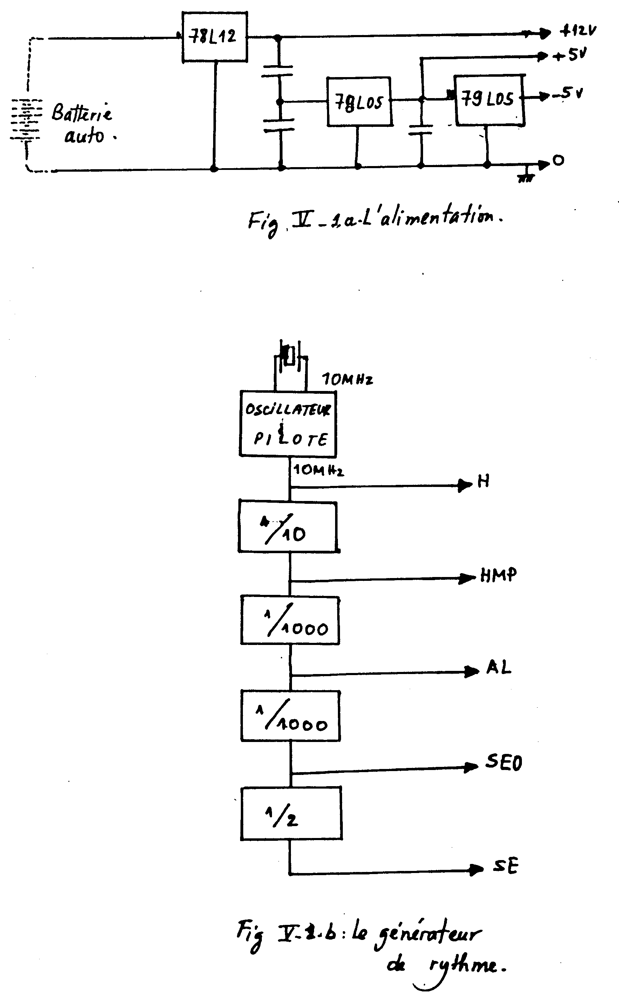

Les chronogrammes de la figure II-2 nous montrent comment à partir du signal SE et du signal SR on obtient un signal SD dont la largeur des impulsions est égale au décalage temporel entre SE et SR. En effet, le signal SD est donné par la relation : $SD = SE.\overline{SR}$ (produit logique).

A l'entrée incrémentation d'un compteur (voir fig. II-3) on applique le signal SD.H (où H est le signal d'horloge pilote) on obtient à la sortie du compteur un nombre N représentant le décalage temporel entre SE et SR qui nous permet d'évaluer la distance instantanée véhicule-obstacle, et deux opérations successives de comptage nous permettra d'évaluer leur vitesse relative. En effet, la conversion distance-temps s'effectue comme suit :

Pendant la période d'horloge $\tau$ le signal IR parcourt une distance

$$d = \tau \cdot c$$

La distance parcourue par le signal entre l'émission et la réception (aller et retour) est :

$$2D = t.c$$

où t = N. est le décalage temporel.

d'où

$$D = \frac{N.\tau.c}{2}$$

Le compteur est remis à zéro chaque fois que le programme principal est exécuté grâce à un signal RAZ généré par le microprocesseur.

Le compteur est dans ce cas prêt à compter de nouveau.

## II-3 Choix et calcul des éléments

Du fait que les impulsions à traiter sont très brèves :
- Les éléments logiques choisis doivent être très rapides (temps de monté et temps de descente 50 ns).
- Les éléments analogiques doivent avoir une large bande (de l'ordre de 100 MHZ).

### a) Emetteur :

Une diode du type CQY 11c conviendra, dont les caractéristiques principales :
- longueur d'onde : $\lambda$ = 850 nm
- surface d'émission de diamètre $\varnothing$ = 3 mm
- temps de montée : tm = 30 ns
- temps de descente : td = 30 ns.
  L'amplificateur associé à la diode :
- amplificateur opérationnel du type 74S140.

### b) Récepteur :

La diode de réception est du type : BPX66 (PIN) dont les caractéristiques principales :
- longueur d'onde : $\lambda$ = 850 nm
- surface de réception, de diamètre $\varnothing$ = 1 mm
- temps de montée : tm = 1 ns
- temps de descente : td = 1 ns.
  L'amplificateur associé à cette diode est un transistor H.F du type MRF8004.

Les comparateurs seront choisis de la série CMOS : un quadruple comparateur du type 4574 conviendra pour notre récepteur.

Le seuil des comparateurs est réglable grâce à un pont diviseur de tension.

Remarque : Les valeurs des résistances du pont diviseur se déterminent en fonction du seuil choisi.

La somme et l'inversion logiques sont assurées par la moitié d'un circuit CMOS du type CD4002MD (quadruple NOR à quatre entrées).

### c) Module traitement numérique de l'information :

Un circuit intégré du type CD4011MD assurera les produits SD = SE.SR et SD.H (voir fig. II-3).

La fonction comptage est assurée par un circuit TTL du type 54/74161 (compteur binaire 4 bits) et nécessitera une alimentation de 5V, la remise à zéro est assurée pour le microprocesseur grâce à un signal RAZ.

## Section III

## MODULE DECISION

### III-1 Description générale

Cette partie est destinée à recevoir l'information binaire et à exécuter un programme qui spécifie le mode d'exécution automatique du freinage.

Elle constitue un système à microprocesseur formé de :
- Un processeur qui assure le déroulement logique du programme.
- Une mémoire vive (RAM) qui sert de réservoir pour les informations qui circulent à travers les bus.
- Une mémoire morte (ROM) qui contient le programme.

La figure III-1 illustre le schéma synoptique du module décision.

### III-2 Système à microprocesseur : Matériel

L'architecture du système à microprocesseur est des plus simples et des plus économiques, elle comprend :
- Un microprocesseur du type MC6802 de MOTOROLA qui est un microprocesseur, très répandu, il renferme un générateur d'horlage biphase ($\varnothing$1, $\varnothing$2) sans recouvrement et une RAM de 128 mots largement suffisante pour le cas de notre programme. Il nécessite une alimentation de 5V et une horlage de 1MHZ.
- Une mémoire REPROM de 2K mots du type MC68708 de MOTOROLA. Ce type de ROM est effaçable et reprogrammable, et nécessite une alimentation de +12V et une autre de -5V.
- Un interface parallèle d'entrée-sortie (PIΛ) du type 6820 de MOTOROLA également. Il nécessite une tension d'alimentation de 5V.

### III-3 Système à microprocesseur : Logiciel

Le rôle de la partie décision est d'analyser le mouvement relatif entre le véhicule et l'obstacle : elle a pour tâche de calculer la distance D séparant les deux mobiles ainsi que leur vitesse relative, et à partir de ces deux informations elle spécifie le mode de freinage en cas de nécessité de celui-ci.

Suivant les valeurs de V et de D, on distingue quatre modes de décision :
- pas de freinage et pas de signalisation d'avertissement.
- pas de freinage mais signalisation d'avertissement.
- freinage progressif avec signalisation d'avertissement.
- freinage sec.

Chaque mode correspond à une certaine gamme de valeurs de D et à une certaine gamme de valeurs de V. Ces gammes dépendent de la nature de la chaussée (glissante ou sèche).

Le microprocesseur comprendra l'état de la chaussée grâce au bit C (voir fig. III-2), l'état haut de C correspond à une chaussée glissante, l'état bas correspond à une chaussée sèche, est c'est au conducteur de sélectionner l'état du bit C selon la nature de la chaussée.

On trouve dans la figure III-3 la répartition des modes de freinage selon les gammes de V et de D, dans les cas :
- chaussée sèche (fig. III-3 a)
- chaussée glissant (fig. III-3 b).

III-4 Calcul de la distance instantanée et de la vitesse relative

On a montré que

$$D = \frac{N \cdot C}{2}$$

où
N    : est le nombre binaire contenu dans le compteur
      : est la période de l'oscillation pilote
C    : célérité de la lumière.

Pour notre cas, on a choisi une fréquence de 10MHZ pour l'oscillateur, donc chaque élément binaire de comptage correspond à 15 m, en d'autres termes cette valeur définit la résolution du système :
D : (exprimée en m) = N x 15.

La vitesse est donnée par la relation :

$$V = \frac{D - D}{T}$$

où D et D sont deux distances instantanées successives.
T :    est la période de SE.
Pour un choix de T = 2s.
V =    (N - N) 27.Km/h =
V =            N.27 Km/h.

Le raisonnement sur D et V est équivalent au raisonnement sur N et N.

Les modes de freinage se répartissent sur les gammes de N et de N comme indiqué sur la figure III-4.

Le programme de décision (PRODEC) obéit à l'organigramme de la figure III-5 et est reéxécuté à chaque front montant de SE. A la fin de l'exécution le compteur est remis à zéro grâce au bit RAZ.

Section IV

MODULE EXECUTION

IV-1 Description générale (fig. IV-1)

Cette partie comprend :
- Un étage commande
- Des organes d'exécution.

IV-2 Principe de fonctionnement

IV-2-1 Etage commande :

Selon le mode de freinage, et par le biais des deux bits S1 et S2 le microprocesseur commande l'un des deux triacs formant l'étage de commande des organes d'exécution (voir fig. IV-2).

Si S1 est à l'état haut et S2 à l'état bas, le triac TR1 conduit et actionne le moteur de freinage progressif.

Si S1 est à l'état bas et S2 à l'état haut, le triac TR2 conduit et actionne le moteur de freinage sec.

Dans le cas où S1 et S2 sont à l'état bas, les triacs TR1 et TR2 restent bloqués (pas de freinage).

Le cas où S1 et S2 sont simultanément à l'état haut est exclu.

Les transistors de cet étage sont du type 2N 5916.

Les triacs sont du type T 6000 B.

IV-2-2 Organe d'exécution :

a) Constitution (fig. IV-2)

L'organe d'exécution est constitué de :
- Un réservoir hydraulique (1).
- Une pompe à engrenages accouplée à un moteur électrique (2).
- Un vérin hydraulique à simple piston (3).
- Une soupape de sureté (soupape de décharge) (4).
- Une électrovanne à une voie (5).
- Un circuit d'aspiration et de refoulement du fluide (6 et 7).
- Un circuit de retour du fluide (8).

b) Emplacement

L'ensemble des éléments constituant l'organe d'exécution qui occupe un espace assez réduit seront placés à proximité du moteur du véhicule à l'exception du vérin hydraulique qui sera placé juste au dessus de la pédale de frein.

c) Fonctionnement (fig. IV-3)

Freinage brusque

Lorsque la commande émettra le signal de freinage brusque, le triac TR1 se ferme établissant ainsi le passage du courant électrique à partir de la batterie du véhicule vers l'enroulement du moteur électrique M1 (P). Celui-ci démarre en entraînant la pompe hydraulique qui refoule le fluide dans la chambre du vérin. Sous l'action de la pression du fluide, le piston du vérin se déplace et appuie sur la pédale de frein.

Dans le cas où la pression dans le circuit de refoulement dépasse la pression admise (pression nécessaire pour le freinage), la soupage de décharge s'ouvre et "by-passe" une partie du fluide vers le circuit de retour ce qui permettra de maintenir la pression dans le circuit de refoulement égale à la pression nécessaire au freinage.

Freinage progressif

Lorsque la commande émettra le signal de freinage progressif, le triac TR2 se ferme établissant ainsi le passage du courant électrique à partir de la batterie du véhicule vers l'enroulement du moteur électrique M2 (P), le contact intermittent R et l'électrovalve à une voie E.V.

Le moteur électrique démarre en entraînant la pompe hydraulique qui refoule le fluide dans la chambre du vérin. Sous l'action de la pression du fluide le piston du vérin se déplace et appuie sur la pédale de frein.

Entretemps le rupteur R ouvre et ferme alternativement le circuit alimentant l'électrovalve (E.V). Cette dernière s'ouvrira et se fermera au rythme du rupteur ce qui permettra de décharger périodiquement le circuit de refoulement (circuit de freinage) et d'obtenir un ralentissement du véhicule (freinage par petits coups répétés).

A la fin du freinage (aussi bien brusque que progressif), c'est-à-dire quand la commande n'émet plus de signaux, le triac sollicité (TR1 ou TR2) coupe le circuit électrique ce qui occasionnera l'arrêt des éléments concernés. Le ressort de rappel agit sur la pédale de frein qui à son tour repousse le piston du vérin vers sa position initiale.

Section V

SYNTHESE, MODULES COMMUNS ET ACCESSOIRES

V-1 Modules communs

a) L'alimentation :

L'alimentation doit délivrer diverses tensions régulées : une tension de + 12V, une tension de + 5V et une tension de - 5V.

Ce module est réalisé en montant trois circuits intégrés régulateurs de tension comme indiqué à la figure V-1-a.

b) Le générateur de rythme :

Ce générateur est destiné à produire le signal SE de 2s de période (T), le signal H de période 0,1 ms ( ) le signal de 1 ms de période qui attaque le microprocesseur et le signal de 1 ms de période qui attaque l'avertisseur sonore.

Cette variété de périodes est obtenue par des divisions successives de la période pilote de 0,1 ms (voir fig. V-1-b).

V-2 Accessoires

a) Consignes "visibilité" et "nature de la chaussée" :

Le système est muni de deux commutateurs :

Le premier a cinq (05) positions dont chaque position spécifie un niveau de visibilité (clair, brouillard, pluie, vent de sable, neige) qui correspond à l'intérieur du système à un certain seuil pour les comparateurs. Les positions sont commutées manuellement par le conducteur.

Le second a deux (02) positions dont chaque position spécifie la nature de la chaussée (sèche, glissante) qui correspond à l'intérieur du système à l'état du bit C. La commutation se fait manuellement également.

Ces deux accessoires sont reproduits directement sur le schéma détaillé du système (fig. V-2).

b) Avertisseurs audio-visuels :

Selon le mode de freinage, le conducteur peut être averti avec un signal lumineux et un signal sonore.

Ces deux accessoires sont commandés simultanément par le bit V issu du microprocesseur.

Si V = 1, les deux avertisseurs sont actionnés.

Si V = 0, les deux avertisseurs sont bloqués.

Remarque : Le système peut être rendu totalement automatique en introduisant un testeur de visibilité et un testeur de la nature de la chaussée (détecteur de verglas).

c) Afficheur pour la distance et la vitesse :

Le conducteur peut lire sa vitesse et sa distance relatives par rapport à l'obstacle.

La distance est prélevée de la sortie du compteur, quant à la vitesse, elle est prélevée de la sortie du microprocesseur (voir fig. V-2).

V-3 Synthèse du système

La figure (V-2) illustre le schéma détaillé du système avec ses accessoires.

## LA PROGRAMMATION

Le programme PRODEC à charger dans la ROM est la traduction en langage machine de l'organigramme d'exécution.

Et comme la ROM est effaçable et reprogrammable (REPROM), le système offre des possibilités de modifications du programme en vue d'optimiser son fonctionment.

## LEGENDE DE LA FIGURE IV-3-a

1 - Réservoir hydraulique.
2 - Pompe à engrenages entraînée par moteur à deux (2) enroulements (vitesse rapide et vitesse lente).
3 - Vérin hydraulique à simple piston.
4 - Soupape de décharge (soupape de sureté).
5 - Electrovalve à une (1) voie.
6-7 - Circuit d'aspiration et refoulement du fluide.
8 - Circuit de retour.

## LEGENDE DE LA FIGURE IV-3-b

TR1 -       triac N° 1.
TR2 -       triac N° 2.
M1 (P) -       premier enroulement du moteur (vitesse rapide).
M2 (P) -       deuxième enroulement du moteur (vitesse lente).
E.V -       électrovalve à une voie.
R -       rupteur (contact s'ouvrant et se fermant de façon périodique).

## Revendications

1. Système pour freinage automatique de véhicules comprenant

a) une partie émetteur/récepteur qui en utilisant des rayons électromagnétiques détecte des obstactles mobiles ou immobiles qui se trouvent à une distance donnée en direction de la trajectoire du véhicule,

b) une partie électronique qui en utilisant un micro-ordinateur traite les signaux de la partie émetteur/récepteur et fournit au conducteur des informations visuelles et/ou acoustiques en utilisant un afficheur ou une alarme audio-visuelle et

c) une partie d'éxécution qui au cas où l'obstacle ne quitte pas la trajectoire du véhicule et où le conducteur ne réagit pas, ordonne par l'intermédiaire du micro-ordinateur une exécution du freinage en activant un organe hydraulique de freinage, caractérisé en ce que

d) la partie emetteur/récepteur comprend des paires de diodes infrarouges montées à l'avant du véhicule,

e) la distance d'un obstacle dans la trajectoire du véhicule est déterminée en comptant le nombre d'impulsions apparaissant dans l'intervalle de décalage du signal infrarouge émis et du signal infrarouge reçu, et

f) la partie électronique contient un module de décision qui, selon des seuils determinés, fournit des signaux d'exécution suivants:

- pas de freinage et pas de signalisation d'avertissement,
- signalisation d'avertissement sans freinage,
- freinage progressif avec signalisation d'avertissement ou
- freinage sec,

ces seuils déterminés peuvent être modifiés selon la vitesse du véhicule et d'un commutateur activé manuellement selon les conditions de la surface de la chaussée.

2. Système suivant la revendication 1, caracterisé en ce que quatre paires de diodes infrarouges sont montés à l'avant du véhicule à distances egales.

3. Systéme suivant la revendication 1, caracterisé en ce que le module de décision contient les éléments suivants:

- un processeur assurant le décision logique du programme,
- une memoire vive (RAM) pour réserver les informations, et
- une mémoire morte (ROM) contenant le programme.

4. Système suivant une des revendications précédantes, caracterisé en ce que la partie d'éxecution contient des organes d'éxecution en forme de deux triac (TR1, TR2).

5. Système suivant une des revendications précédantes, caracterisé en ce que la synchronisation du système est faite par un générateur de rythme controllant un oscillateur pilote et plusieurs stages de division produisant des signaux de synchronisation H, HMP, AL, SED et SE.

## Claims

1. A system for automatically braking vehicles featuring

a) a transceiver part which senses by means of electromagnetic radiation moving and stationary obstacles located at a certain distance away from the vehicle in its direction of travel,
b) an electronic part which by means of a microprocessor processes signals of the transceiver part and furnishes the driver visual and/or acoustical information by means of a display or audiovisual alarm means, and
c) an actuator part which, should the obstacle fail to leave the travel path of the vehicle and/or should driver fail to react, produces with the aid of the microprocessor a command for operating the brake, by a hydraulic braking member being actuated, characterized in that
d) said transceiver part comprises pairs of infrared diodes mounted on the front end of the vehicle,
e) said distance of an obstacle in the travel path of the vehicle is determined by the number of pulses being counted as they occur in the time interval between output of said infrared signal and input of said infrared signal, and
f) said electronic part contains a decision-making module which according to certain critical values furnishes the following actuating signals:
- no braking and no warning signal output,
- warning signal output without braking,
- increasing braking with warning signal output or
- sudden braking
said critical values permitting modification according to the travel speed and by a manually activatable converter according to the condition of the road surface.

2. A system according to claim 1, wherein four pairs of infrared diodes are mounted equispaced from each other on the front end of the vehicle.

3. A system according to claim 1, wherein said decision-making module contains the following elements:
- a processor for permitting logical decisions to be made according to a programm
- a RAM for storing the information, and
- a ROM containing the program

4. A system according to any of the previous claims, wherein said actuating part contains actuating members in the form of two Triacs (TR1, TR2).

5. A system according to any of the previous claims, wherein the system is synchronized by means of a clock generator controlling a pilot oscilloscope and a plurality of buffer stages, furnishing the sync signals H, HMP, AL, SED and SE.

**Patentansprüche**

1. System zum automatischen Abbremsen von Fahrzeugen, welche aufweist
a) eine Sender/Empfängerpartie, die mittels elektromagnetischer Strahlen bewegliche oder unbewegliche Hindernisse erfasst, die sich in einem bestimmten Abstand in Fahrtrichtung vom Fahrzeug befinden,
b) eine elektronische Partie, die mittels eines Mikrorechners die Signale der Sender/Empfängerpartie verarbeitet und an den Fahrer visuelle und/oder akustische Informationen mittels einer Anzeige- oder audiovisuellen Alarmeinrichtung liefert und
c) eine Betätigungspartie, die, falls das Hindernis den Fahrweg des Fahrzeuges nicht verlässt und/oder der Fahrer nicht reagiert, unter Zwischenschaltung des Mikrorechners einen Befehl zur Betätigung der Bremse erteilt, indem ein hydraulisches Bremsorgan beaufschlagt wird, dadurch gekennzeichnet, dass
d) die Sender/Empfängerpartie Paare von Infrarotdioden umfasst, die an der Vorderseite des Fahrzeuges montiert sind,
e) der Abstand eines Hindernisses auf dem Fahrweg des Fahrzeuges dadurch bestimmt wird, dass die Anzahl der Impulse gezählt wird, die in dem Zeitintervall zwischen der Ausgabe des Infrarotsignales und dem Empfang des Infrarotsignales auftreten, und
f) die elektronische Partie einen Entscheidungsmodul enthält, der nach bestimmten Grenzwerten folgende Betätigungssignale liefert:
- kein Bremsen und keine Warnsignalgebung,
- Warnsignalgebung ohne Bremsen,
- zunehmendes Bremsen mit Warnsignalgebung oder
- scharfes Bremsen,
wobei die bestimmten Grenzwerte entsprechend der Fahrgeschwindigkeit und von einem manuell aktivierbaren Wandler entsprechend dem Zustand der Strassenfläche modifiziert werden können.

2. System nach Anspruch 1, dadurch gekennzeichnet, dass vier Paare Infrarotdioden an der Vorderseite des Fahrzeuges in gleichem Abstand voneinander montiert sind.

3. System nach Anspruch 1, dadurch gekennzeichnet, dass der Entscheidungsmodul die folgenden Elemente enthält:
   - einen Prozessor zu Ermöglichung logischer Entscheidungen nach einem Programm,
   - einen Zugriffspeicher (RAM) zum Speichern der Informationen, und
   - einen Nurlesespeicher (ROM), der das Programm enthält.

4. System nach einem der vorhergehenden Ansprüche, dadurch gekennzeichnet, dass die Betätigungspartie Betätigungsorgane in Form von zwei Triacs (TR1, TR2) enthält.

5. System nach einem der vorhergehenden Ansprüche, dadurch gekennzeichnet, dass die Synchronisation des Systems mittels eines einen Pilotoszillographen steuernden Taktgenerators und mehreren Trennstufen erfolgt, die Synchronisationssignale H, HMP, AL, SED und SE liefern.

Fig I.1    Synoptique du système.

Fig II - 1    Synoptique  de  la  partie
· Emission / Reception.

Fig II - 2 :  Schéma  détaillé.

11

Fig. I. 3. Chronogrammes

Fig III - 1: Synoptique du module "Decision"

Fig II - 2 - Schéma détaillé.

EP 0 314 117 B1

Fig III - 3 - a : Modes de freinage selon D et V pour une chaussée sèche.

Fig III - 3 - b : Modes de freinage selon D et V pour une chaussée glissante.

14

Fig III - 4.a : Modes de freinage selon N et ΔN
pour une Chaussée sèche

Fig III - 4.b : Modes de freinage selon N et ΔN
pour une Chaussée glissante.

Fig II - 5 Organigramme.

Fig. IV.1 : "Synoptique du bloc "exécution".

Fig IV.2 - Commande du bloc "exécution

Fig IV.3 - Organes d'exécution.

Fig Ⅴ_2. Schéma de synthèse.

Fig. Ⅴ-1.a. L'alimentation.

Fig Ⅴ-1.b : le générateur de rythme.